# EUROPEAN PATENT APPLICATION

(11) **EP 4 796 209 A1**
(43) Date of publication of application: **26.08.2026**
(21) Application number: 24897502.1
(22) Date of filing: 25.11.2024
(51) Int. Cl.: B01F 35/10, B01F 27/701, B01F 33/70, B01F 35/30, B01J 3/00, B01J 3/03, B29B 7/22, F16C 17/02, F16C 33/74, F16C 35/02, F16J 15/16, B01F 101/06

(54) **KNEADER**

(30) Priority: 28.11.2023 JP 2023200919; 31.05.2024 JP 2024089363; 19.11.2024 JP 2024201527
(71) Applicant: KABUSHIKI KAISHA KOBE SEIKO SHO (KOBE STEEL, LTD.), Hyogo 651-8585 (JP)
(72) Inventor: KAWASAKI, Ryota, Kobe-shi, Hyogo 651-2271 (JP); HIGASHI, Kosuke, Kobe-shi, Hyogo 651-2271 (JP)
(74) Representative: TBK
(86) International application number: PCT/JP2024/041686
(87) International publication number: WO 2025/115817

(57) **Abstract**

Provided is a kneader (41) allowing maintenance for sealing members to be easily performed. The kneader (41) includes: a chamber (3) including a chamber body (3a) and a bearing support part (3b); a rotor (3) including a rotor body (52) and a rotor shaft (54) that are separable from each other; a bearing unit (2) that rotatably supports the rotor shaft (54) in the bearing support part (3b); an inner sealing member (4) that seals a gap between the bearing unit (2) and the rotor shaft (54); and an outer sealing member (5) that seals a gap between the bearing unit (2) and the bearing support part (3). Separation of the rotor body (52) from the rotor shaft (54) allows the bearing unit (2) to be extracted from between the bearing support part (3b) and the rotor shaft (54) to a kneading space (S1) in the chamber body (3a), and allows the bearing unit (2) to be inserted into between the bearing support part (3b) and the rotor shaft (54) from the kneading space (S1).

## Description

### Technical Field

The present invention relates to a kneader for performing kneading of a material in presence of a working fluid in a supercritical state or a subcritical state.

### Background Art

Patent Literature 1 discloses a kneader including a rotor with a rotor shaft, and a viscoseal fitted to an end of the rotor shaft on a discharge side. The viscoseal has a screw groove, which has a groove depth that is increased from the pressure side toward the atmosphere side in order to reduce the leakage of a kneading material.

There is a case where the above-described kneading is performed in presence of a working fluid in a supercritical or subcritical state. The kneader to be used in this case is required to include a chamber with high airtightness. In particular, high sealing performance is required for the shaft part of the kneading rotor. On the other hand, a sealing member such as the viscoseal is a consumable, requiring maintenance such as replacement of the sealing member.

The viscoseal described in Patent Literature 1, however, disposed in the chamber together with the rotor while being fitted to the rotor shaft, has to be taken out from the chamber for maintenance of the viscoseal. This hinders the maintenance for the viscoseal from being easily performed.

### Citation List

### Patent Literature

Patent Literature 1: Japanese Unexamined Patent Publication No. Hei 6-87119

### Summary of Invention

It is an object of the present invention to provide a kneader allowing maintenance on a sealing member to be easily performed.

Provided is a kneader that performs kneading of a material in presence of a working fluid in a supercritical state or a subcritical state, including a chamber, a rotor, a bearing unit, an inner sealing member, and an outer sealing member. The chamber includes a chamber body defining a kneading space and a bearing support part defining a bearing housing space, with communication between the kneading space and the bearing housing space. The rotor includes a rotor shaft and a rotor body that are connected to each other in a rotor axis direction so as to be separable from each other, wherein the rotor shaft is disposed in the bearing housing space and the rotor body is configured to perform kneading of the material in the kneading space. The bearing unit is disposed between an inner peripheral surface of the bearing support part and an outer peripheral surface of the rotor shaft in the bearing housing space so as to be attachable to and detachable from the bearing support part and the rotor shaft, and rotatably supports the rotor shaft while being supported by the bearing support part. The inner sealing member seals a gap between an inner peripheral surface of the bearing unit and the outer peripheral surface of the rotor shaft. The outer sealing member seals a gap between an outer peripheral surface of the bearing unit and the inner peripheral surface of the bearing support part. The bearing unit is disposed such that separation of the rotor body from the rotor shaft allows the bearing unit to be extracted in an axis direction of the rotor from between the inner peripheral surface of the bearing support part and the outer peripheral surface of the rotor shaft to the kneading space and allows the bearing unit to be inserted into between the bearing support part and the rotor shaft in the rotor axis direction from the kneading space.

### Brief Description of Drawings

FIG. 1 is a flow sheet showing a kneading apparatus according to a first embodiment of the present invention.
FIG. 2 is a view showing a cross section along a rotor axis direction of a kneader included in the kneading apparatus.
FIG. 3 is a cross-sectional view of a main part of the kneader, showing a state where a rotor body of the kneader is coupled to a rotor shaft.

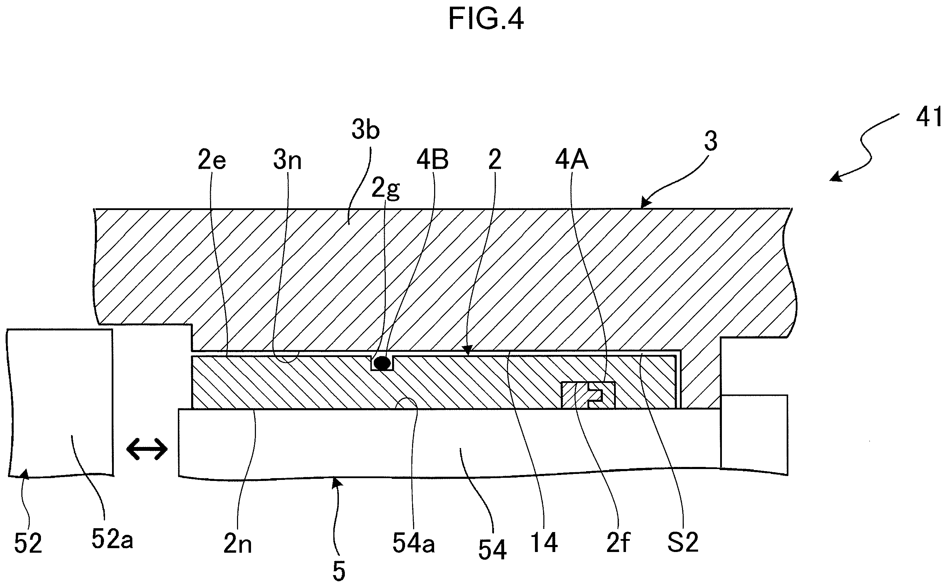

FIG. 4 is a cross-sectional view of a main part of the kneader, showing a state where the rotor body is separated from a rotor shaft.
FIG. 5 is a cross-sectional view of a kneader according to a second embodiment of the present invention.
FIG. 6 is a cross-sectional view of a kneader according to a third embodiment of the present invention.
FIG. 7 is a cross-sectional view of a kneader according to a fourth embodiment of the present invention.
FIG. 8 is a cross-sectional view of a kneader according to a fifth embodiment of the present invention.
FIG. 9 is a cross-sectional view of a kneader according to a sixth embodiment of the present invention.
FIG. 10 is a cross-sectional view of a kneader according to a seventh embodiment of the present invention.
FIG. 11 is a cross-sectional view of a kneader according to a modification of the seventh embodiment.
FIG. 12 is a cross-sectional view of a kneader according to an eighth embodiment of the present invention.
FIG. 13 is a cross-sectional view of a kneader according to a modification of the eighth embodiment.
FIG. 14 is a cross-sectional view of a kneader according to a reference example.

### Detailed Description

Hereinafter, there will be described preferred embodiments of the present invention with reference to the drawings.

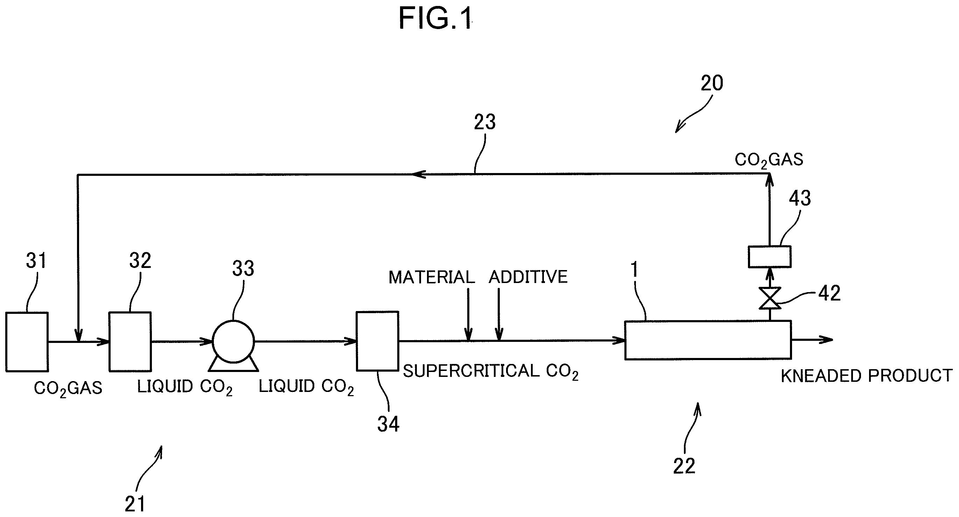

FIG. 1 shows a kneading apparatus 20 including a kneader 41 according to a first embodiment of the present invention. The kneader 41 performs kneading of a material in presence of a working fluid in a supercritical state or a subcritical state. The material in each embodiment is rubber, but may be a resin, a food, or the like. The kneading apparatus 20 performs the kneading in a batch manner.

The supercritical state is a state where the temperature is equal to or higher than the critical temperature of the working fluid and the pressure is equal to or higher than the critical pressure of the working fluid. The subcritical state is a state where only one of the temperature and the pressure is equal to or higher than its critical value whereas the other is lower than its critical value, or a state where both of the temperature and pressure are lower than their respective critical values but at least one of the temperature and the pressure is so higher than its normal value (normal temperature or normal pressure) that the state is close to the critical state.

Examples of substances constituting the working fluid include carbon dioxide, nitrogen, hydrogen, xenon, ethane, ammonia, methanol, and water. Among these, suitable for rubber kneading are carbon dioxide and nitrogen.

In the present embodiment, carbon dioxide (CO₂) is used as a working fluid, and kneading is performed in presence of carbon dioxide in a supercritical state (supercritical CO₂). The kneader according to the present invention is also adaptable to kneading in presence of another working fluid in a supercritical state or in presence of a working fluid in a subcritical state.

The kneading apparatus 20 includes a production section 21 and a kneading section 22.

The production section 21 produces supercritical CO₂. The production section 21 includes a tank 31, a first heat exchanger 32, a pump 33, and a second heat exchanger 34.

In the tank 31 is stored CO₂ gas. The first heat exchanger 32 cools the CO₂ gas supplied from the tank 31 into liquid CO₂ in the liquid state.

The pump 33 pressurizes the liquid CO₂. The power of the pump 33 required for pressurizing the liquid CO₂ is smaller than the power of the pump 33 required for pressurizing the CO₂ gas. The pump 33 forcibly feeds the pressurized liquid CO₂ to the downstream side.

The second heat exchanger 34 heats the pressurized liquid CO₂ in a container to vaporize the liquid CO₂ into supercritical CO₂.

The kneading section 22 performs kneading of the material in presence of supercritical CO₂. The kneading section 22 includes the kneader 41, a regulation valve 42, and a separation filter 43.

In the flow path interconnecting the production section 21 and the kneading section 22, a material and an additive are added to supercritical CO₂. Supercritical CO₂ and the materials and additives added thereto are introduced into the kneader 41.

The kneader 41 kneads the material and the additive in presence of supercritical CO₂ inside the kneader 41. The material and the additive are allowed to be rapidly kneaded by the dissolution thereof in supercritical CO₂.

In the case of the material being a polymer material such as rubber or resin, the additive is an addition agent, a kneaded rubber, a plant-derived material containing cellulose nanofibers or the like. In the case where the material is a food product, the additive is a food additive or the like. The addition of the additive is optional.

The completement of the kneading in the kneader 41 involves the separation of the supercritical CO₂ and the kneaded product of the material and the additive in the kneader 41. The kneaded product and supercritical CO₂ are separately discharged from the kneader 41. The regulation valve 42 adjusts the flow rate of the supercritical CO₂ that is discharged from the inside of the kneader 41. In the present embodiment, the regulation valve 42 decompresses the supercritical CO₂ discharged from the kneader 41 into CO₂ gas. The separation filter 43 separates the additive remaining in the CO₂ gas from the CO₂ gas.

The kneading apparatus 20 further includes a return flow path 23. The return flow path 23 allows the CO₂ gas having been separated from the kneaded product generated by the kneading of the material to flow in the return flow path 23, guiding the CO₂ gas to the upstream side of the first heat exchanger 32. Specifically, the return flow path 23 has an upstream end and a downstream end, wherein the upstream end is connected to the separation filter 43 of the kneading section 22 and the downstream end is connected to a flow path interconnecting the tank 31 and the first heat exchanger 32.

The return flow path 23 allows the CO₂ gas having been separated from the kneaded product in the kneading section 22 to be returned to the production section 21 through the return flow path 23, thereby allowing the CO₂ gas having been separated from the kneaded product to be reused.

The overall configuration of the kneading apparatus 20 shown in FIG. 1 is shared by the second embodiment and subsequent embodiments described later. The specific configuration of the kneading apparatus including the kneader according to the present invention, however, is not limited to that shown in FIG. 1.

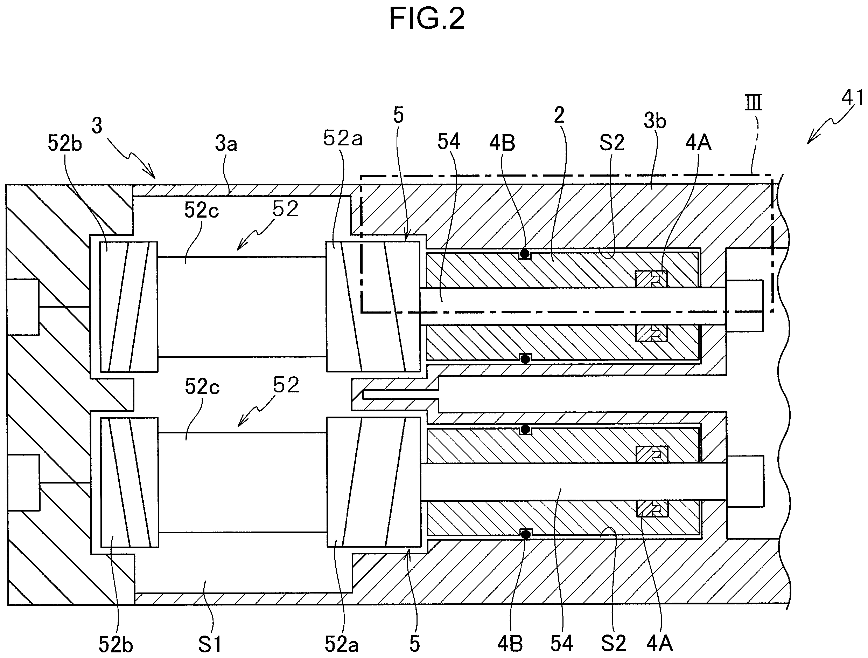

As shown in FIG. 2, the kneader 41 according to the first embodiment includes a chamber 3, a pair of rotors 5, and a bearing unit 2.

The chamber 3 includes a chamber body 3a and a bearing support part 3b. The chamber body 3a defines a kneading space S1, in which kneading of a material is performed. The bearing support part 3b defines a pair of bearing housing spaces S2, and rotatably supports the pair of rotors 5 via the pair of bearing units 2 while housing the pair of bearing units 2 in the pair of bearing housing spaces S2, respectively. The pair of rotors 5 are rotated in the chamber 3 to thereby knead the materials in the kneading space S1.

The kneader according to the present invention is not limited to one including a pair of rotors. The kneader of the present invention encompasses a kneader including only a single rotor and a kneader including three or more rotors.

The pair of rotors 5 extend in the rotor axis direction in the chamber 3 and are arranged in a direction orthogonal to the rotor axis direction in a posture of being parallel to each other. Each of the pair of rotors 5 includes a rotor body 52 and a rotor shaft 54 which are aligned in the rotor axis direction. Each of the pair of rotors 5 is disposed in the chamber 3 rotatably so as to locate the rotor shaft 54 in the bearing housing space S2 and so as to allow the rotor body 52 to knead the material in the kneading space S1.

The rotor body 52 includes a kneading portion 52c, a first screw portion 52a, and a second screw portion 52b. The kneading portion 52c is disposed in the kneading space S1 to knead the material. Specifically, the kneading portion 52c has an outer peripheral surface formed with a spiral tooth. The tooth has a shape to allow the kneading portion 52c rotated in the kneading space S1 to knead the material in the kneading space S1. The first screw portion 52a and the second screw portion 52b are located on both sides of the rotor body 5a in the rotor axis direction, each having a screw shape to push back the material into the kneading space S1 with the rotation of the rotor 5.

The rotor shaft 54 extends along the rotor axis direction from one end part out of opposite end parts of the rotor body 52 in the rotor axis direction, namely, the first screw portion 52a in the present embodiment. The rotor shaft 54 is disposed so as to penetrate the bearing unit 2 housed in the bearing housing space S2 in the rotor axis direction, and rotatably supported by the bearing unit 2.

In each of the pair of rotors 5, the rotor body 52 and the rotor shaft 54 are interconnected in the rotor axis direction so as to be separable from each other. Specifically, in the rotor 5 according to the present embodiment, the rotor body 52 can be separated from the rotor shaft 54 at a position between the first screw portion 52a and the rotor shaft 54.

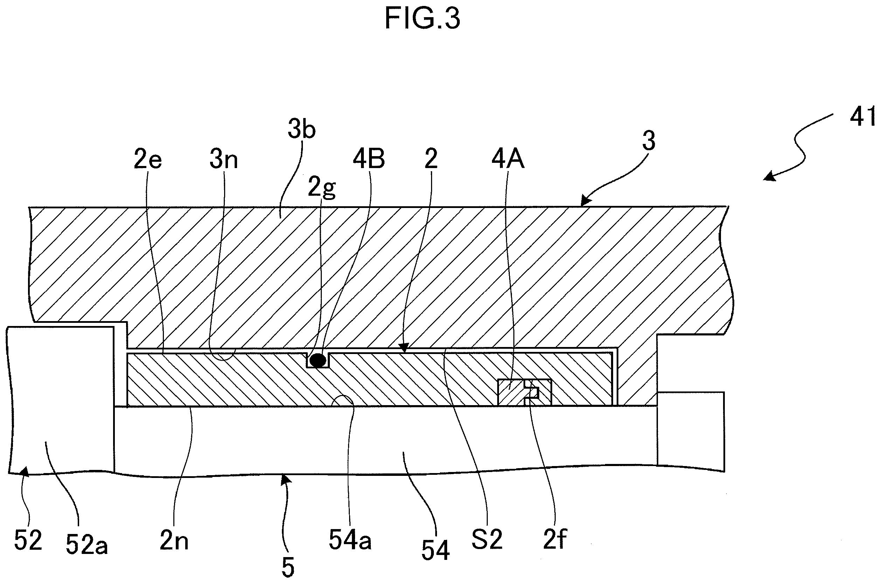

FIG. 3 is an enlarged cross-sectional view of the bearing unit 2 and a peripheral part thereof in the kneader 41, specifically, an enlarged view of a part enclosed with a dashed-dotted line III in FIG. 2. The bearing unit 2 is housed in the bearing housing space S2 so as to be attachable to and detachable from the bearing support part 3b of the chamber 3. The bearing unit 2 has a cylindrical shape disposable around the rotor shaft 54 to rotatably support the rotor shaft 54 while being supported by the bearing support part 3b. The bearing housing part 3b supports each of the pair of bearing units 2 over the entire circumference while being located on the side opposite to the rotor shaft 54 across the bearing unit 2 radially of the rotor shaft 54, that is, on the outer side of the bearing unit 2.

The kneader 41 further includes an inner sealing member 4A and an outer sealing member 4B. The inner and outer sealing members 4A and 4B are arranged so as to restrain fluid in the bearing housing space S2 from leaking in the rotor axis direction.

The inner sealing member 4A has an annular shape, sealing a gap between the outer peripheral surface 54a of the rotor shaft 54 and the inner peripheral surface 2n of the bearing unit 2 over the entire circumference. Specifically, the inner peripheral surface 2n of the bearing unit 2 is formed with an annular inner seal groove 2f, into which the inner sealing member 4A is fitted. The inner sealing member 4A illustrated in FIG. 3 is a single-pressure spring built-in seal, for example, a Variseal (registered trademark). The specific structure of the inner sealing member 4A, however, is not limited. The kneader 41 may include a plurality of inner sealing members aligned in the rotor axis direction.

The outer sealing member 4B has an annular shape, sealing a gap between the outer peripheral surface 2e of the bearing unit 2 and the inner peripheral surface 3n of the bearing support part 3b enclosing the bearing housing space S2 over the entire circumference. Specifically, the outer peripheral surface 2e of the bearing unit 2 is formed with an annular outer seal groove 2g, into which the outer sealing member 4B is fitted. The outer sealing member 4B, alternatively, may be fitted into an annular groove formed in the inner peripheral surface 3n of the bearing support part 3b. The outer sealing member 4B illustrated in FIG. 3 is an O-ring. The specific structure of the outer sealing member 4B, however, is not limited. Besides, the kneader 41 may include a plurality of outer sealing members aligned in the rotor axis direction.

In the kneader 41, the separation of the rotor body 52 from the rotor shaft 54 is performed for maintenance, for example, replacement, of the inner sealing member 4A or the outer sealing member 4B. The separation allows the bearing unit 2 to be extracted from between the inner peripheral surface 3n of the bearing support part 3b and the outer peripheral surface 54a of the rotor shaft 54 to the kneading space S1 in the rotor axis direction. The separation also allows the bearing unit 2 to be inserted into between the bearing support part 3b and the rotor shaft 54 in the rotor axis direction from the kneading space S1. This enables maintenance related to the bearing unit 2, in particular, work such as replacement of the sealing members 4A and 4B, to be easily performed. For example, the extraction of the bearing unit 2 from between the bearing support part 3b and the rotor shaft 4 allows each of the inner and outer sealing members 4A and 4B to be easily replaced. This work does not require the rotor shaft 54 to be taken out from the chamber 3, enabling the space required around the kneader 41 to be reduced as compared with a case where the rotor body 52 and the rotor shaft 54 is required to be taken out from the chamber 3, specifically, eliminating the need for a space to extract the rotor shaft 54 from the chamber 3.

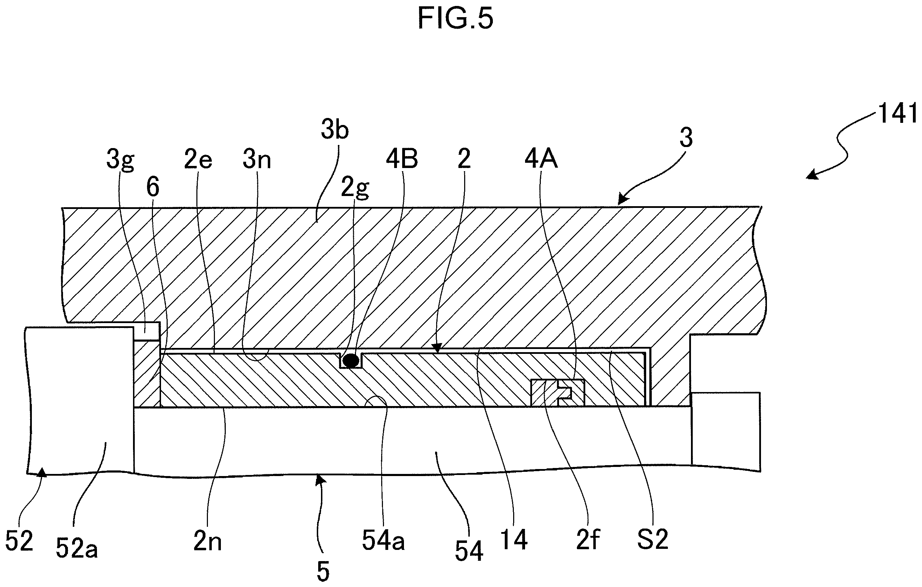

FIG. 5 shows a kneader 41 according to a second embodiment of the present invention. In the second embodiment, the kneader 141 includes all the components of the kneader 41 according to the first embodiment, and the bearing unit 2 further includes a protrusion part 6 in addition to a bearing body part 2h. The bearing body part 2h is a part of the bearing unit 2 on the side farther from the rotor body 52 than the protrusion part 6 (the part on the right side of the protrusion part 6 in FIG. 5), to be inserted into between the outer peripheral surface 54a of the rotor shaft 54 and the inner peripheral surface 3n of the bearing support part 3b.

The protrusion part 6 is formed by one end part of opposite end parts of the bearing unit 2 in the rotor axis direction, the one end part being on the side (the left side in FIG. 5) closer to the end part of the rotor body 52 (the end surface of the first screw portion 52a in the present embodiment), protruding outward radially of the bearing unit 2 (upward in FIG. 5) beyond the outer peripheral surface of the bearing body part 2h. The protrusion part 6, thus, has a thickness larger than the thickness of the bearing body part 2h as to the radius direction of the bearing unit 2.

With the bearing body part 2h inserted between the bearing support part 3b and the rotor shaft 54, the protrusion part 6 protrudes toward the rotor body 52 in the rotor axis direction beyond the bearing support part 3b. The inner peripheral surface enclosing the protrusion part 6 in the chamber 3 has an inner diameter large enough to allow a working gap 3g to be secured between the inner peripheral surface and the outer peripheral surface 6a of the protrusion part 6 radially opposed to the inner peripheral surface, the working gap 3g having a radial dimension to allow a finger or a tool for gripping the protrusion part 6 to be inserted into the working gap 3g.

The protrusion part 6 facilitates the extraction of the bearing unit 2 from between the inner peripheral surface 3n of the bearing support part 3b and the outer peripheral surface 54a of the rotor shaft 54. Specifically, in a state where the rotor body 52 is separated from the rotor shaft 54, an operator can grip the protrusion part 6 with his fingers or a tool and draw the protrusion part 6 in the rotor axis direction to the kneading space S1 to thereby easily extract the bearing unit 2 from between the bearing support part 3b and the rotor shaft 54.

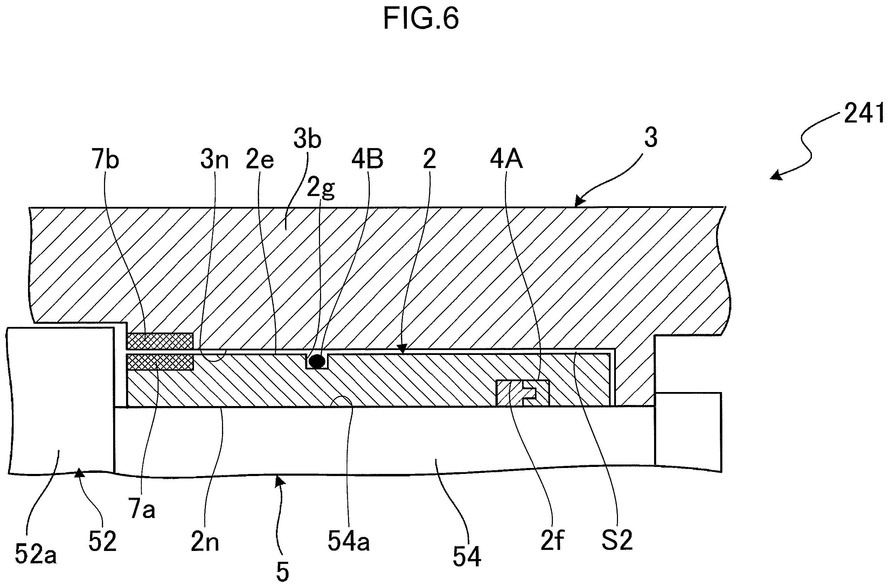

FIG. 6 shows a kneader 241 according to a third embodiment of the present invention. In the present embodiment, the kneader 241 includes all the components of the kneader 141 according to the first embodiment, and further the bearing unit 2 is formed with a male screw part 7a and the bearing support part 3b is formed with a female screw part 7b. The male screw part 7a, specifically, is formed in an outer peripheral surface of an axially inner end part, which is one end part of opposite end parts of the bearing unit 2 in the rotor axis direction, the one end part being on the side closer to the rotor body 52. The female screw part 7b, specifically, is formed in the inner peripheral surface of the bearing support part 3b enclosing one end part of opposite end parts of the bearing housing space S2 on the side closer to the kneading space S1 in the rotor axis direction. The male screw part 7a and the female screw part 7b can be screwed with each other to thereby allow the bearing unit 2 to be fixed in the bearing support part 3b.

The screwing between the male screw part 7a and the female screw part 7b is releasable by the rotation of the bearing unit 2 with respect to the bearing support part 3b in a state where the rotor body 52 is separated from the rotor shaft 54, thereby allowing the bearing unit 2 to be easily extracted from between the inner peripheral surface 3n of the bearing support part 3b and the outer peripheral surface 54a of the rotor shaft 54. Conversely, the screwing of the male screw part 7a and the female screw part 7b fixes the bearing unit 2 to the bearing support part 3b to thereby prevent the bearing unit 2 from being rotated together with the rotor shaft 54.

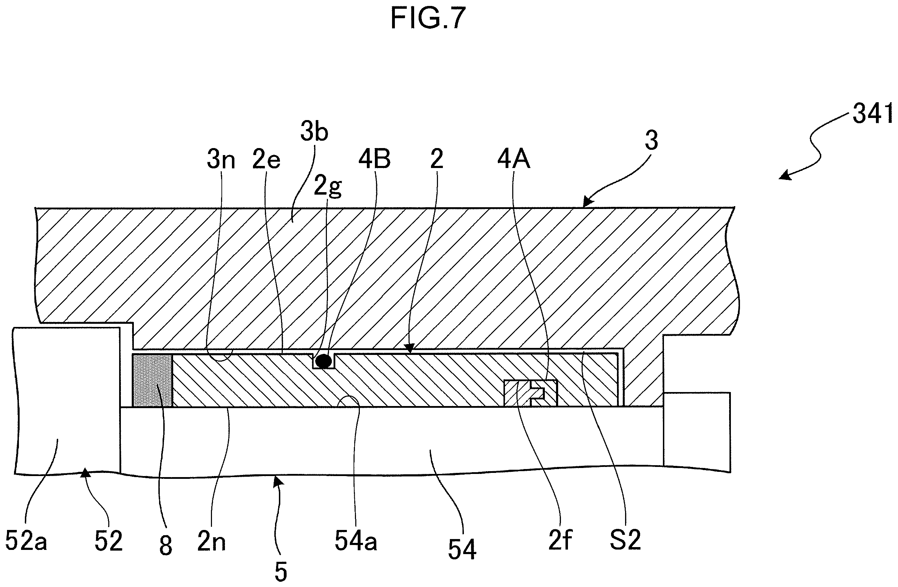

FIG. 7 shows a kneader 341 according to a fourth embodiment of the present invention. In the present embodiment, the kneader 341 including all the components of the kneader 41 according to the first embodiment, and the bearing unit 2 further includes a magnetic part 8. The magnetic part 8 has magnetism to enable the magnetic part 8 to be attracted by a magnet, provided to an axially inner end part which is one end part of opposite end parts of the bearing unit 2 in the rotor axis direction, the axially inner end part being on the side closer to the rotor body 52. The magnetism of the magnetic part 8 has an intensity enough to allow the magnetic part 8 to be attracted to the magnet, for example, a permanent magnet or an electromagnet, to be drawn out from between the inner peripheral surface 3n of the bearing support part 3b and the outer peripheral surface 54a of the rotor shaft 54 in a state where the rotor body 52 is separated from the rotor shaft 54. The magnetic part 8, thus, allows the bearing unit 2 to be easily extracted by use of the magnet.

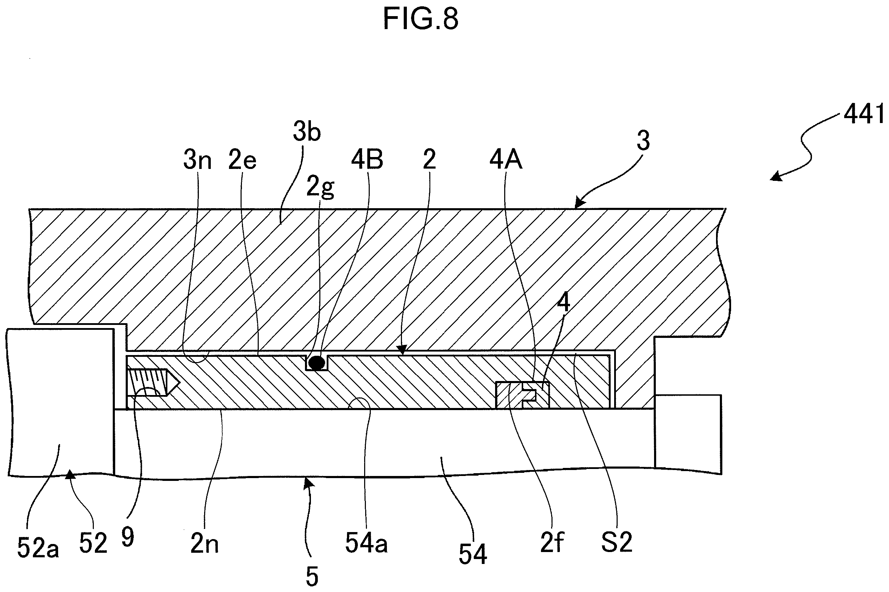

FIG. 8 shows a kneader 441 according to a fifth embodiment of the present invention. In the present embodiment, the kneader 441 includes all the components of the kneader 41 according to the first embodiment, and further the bearing unit 2 has a screw hole 9. Specifically, the screw hole 9 is formed in an axially inner end part, which is one end part of opposite end parts of the bearing unit 2 in the rotor axis direction, the one end part being on the side closer to the rotor body 52, and the screw hole 9 is opened toward the rotor body 52 along the rotor axis direction. The screw hole 9 allows a male screw of a bolt or other drawing tool having an outer peripheral surface formed with the male screw to be inserted into the screw hole 9 while being screwed with the screw hole 9.

The screw hole 9 thus allows the bolt or other male screw members to be screwed into the screw hole 9 in a state where the rotor body 52 is separated from the rotor shaft 54, thereby enabling an operator to grip the drawing tool screwed into the screw hole 9 to draw the drawing tool into the kneading space to thereby easily extract the bearing unit 2 from between the inner peripheral surface 3n of the bearing support part 3b and the outer peripheral surface 54a of the rotor shaft 54.

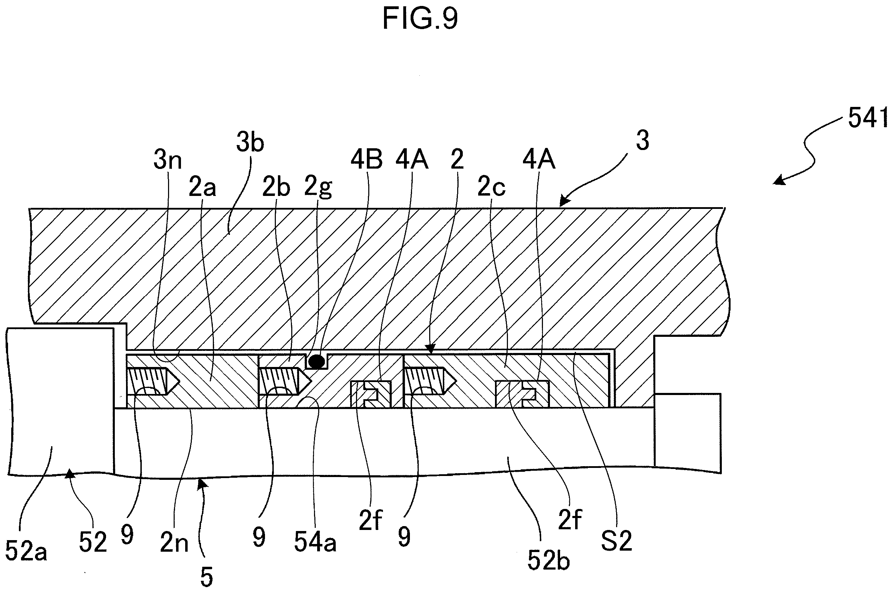

FIG. 9 shows a kneader 541 according to a sixth embodiment of the present invention. In the present embodiment, the kneader 541 includes all the components of the kneader 41 according to the first embodiment, and the bearing unit 2 of the kneader 541 includes a plurality of bearing elements shown in FIG. 9, namely, a first bearing element 2a, a second bearing element 2b, and a third bearing element 2c. The first to third bearing elements 2a to 2c are aligned in order from a side closer to the rotor body 52 in the rotor axis direction, being separatable from each other. The number of the plurality of bearing elements is not limited to three but also allowed to be two or four or more.

Each of the first to third bearing elements 2a to 2c is formed with a screw hole 9 similar to the screw hole 9 shown in FIG. 8. Specifically, the screw hole 9 is formed in an axially inner end part of each of the first to third bearing elements 2a to 2c, opened toward the rotor body 52 along the rotor axis direction. Each of the screw hole 9 allows a bolt or other drawing tool having an outer peripheral surface formed with a male screw to be inserted into the screw hole 9 while being screwed with the screw hole 9.

The bearing unit 2 includes a plurality of inner sealing members 4A and an outer sealing member 4B. Each of the inner sealing members 4A is equivalent to the inner sealing member 4A shown in FIG. 2, and the outer sealing member 4B is equivalent to the outer sealing member 4B shown in FIG. 2. The plurality of inner sealing members 4A are mounted on the inner peripheral surface of the bearing unit 2 at a plurality of positions spaced in the rotor axis direction, respectively. In the example shown in FIG. 9, specifically, each of the inner peripheral surface of the second bearing element 2b and the inner peripheral surface of the third bearing element 2c is formed with an inner seal groove 2f, into which the inner sealing member 4A is fitted. On the other hand, the outer sealing member 4B is fitted into an outer seal groove 2g formed in the outer peripheral surface of the second bearing element 2b. The inner sealing member 4A may be mounted on the inner peripheral surface of the first bearing element 2a. The outer sealing member 4B may be mounted on respective outer peripheral surfaces of the first bearing element 2a and the third bearing element 2c.

In the kneader 541, in a state where the rotor body 52 is separated from the rotor shaft 54, the first bearing element 2a, the second bearing element 2b, and the third bearing element 2c can be extracted in this order from between the inner peripheral surface 3n of the bearing support part 3b and the outer peripheral surface 54a of the rotor shaft 54 in the rotor axis direction. Specifically, the operator can easily perform the extraction of each of the first to third bearing elements 2a to 2c by screwing the male screw part of the drawing tool into the screw hole 9 of each of the first to third bearing elements 2a to 2c and pulling the drawing tool. Besides, the area in which the outer peripheral surface of each of the bearing elements 2a to 2c makes contact with the inner peripheral surface 3n of the bearing support part 3b is smaller than, for example, the area in which the outer peripheral surface 2e of the bearing unit 2 shown in FIG. 2 makes contact with the inner peripheral surface 3n of the bearing support part 3b, which facilitates the extraction of each of the bearing elements 2a to 2c. This allows the maintainability of the kneader 541 to be further improved. This effect is enhanced with an increase in the number of the plurality of bearing elements.

Besides, the plurality of inner sealing members 4A, sealing the gap between the inner peripheral surface 2n of the bearing unit 2 and the outer peripheral surface 54a of the rotor shaft 54, allow the airtightness of the kneader 541 to be improved.

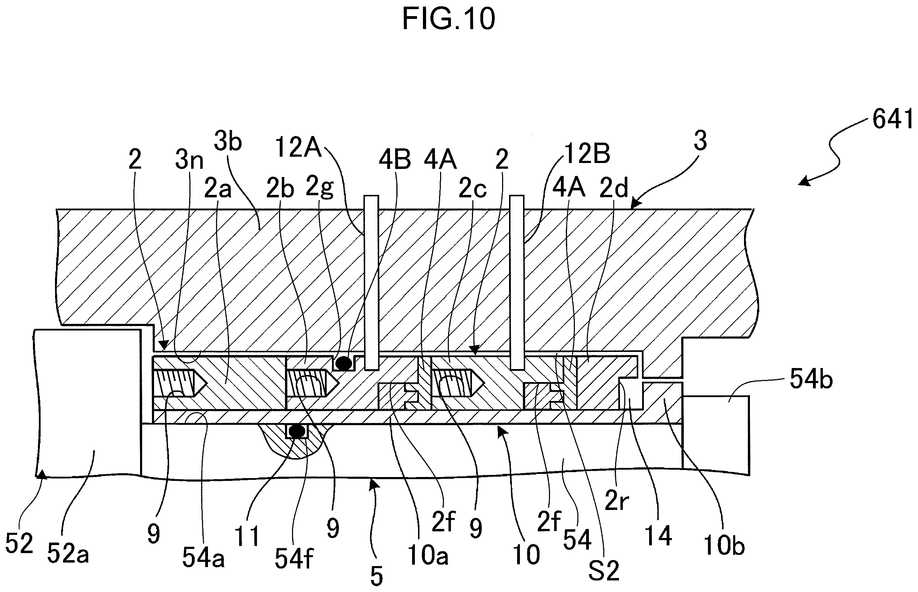

FIG. 10 shows a kneader 641 according to a seventh embodiment of the present invention. The kneader 641 according to the present embodiment, similarly to the kneader 541 according to the sixth embodiment, includes a bearing unit 2 including a plurality of bearing elements; however, the plurality of bearing elements include four bearing elements, namely, a first bearing element 2a, a second bearing element 2b, a third bearing element 2c, and a fourth bearing element 2d, which are aligned in this order from the side closer to the rotor body 52 in the rotor axis direction. Each of the first to fourth bearing elements 2a to 2d has an axially inner end part formed with a screw hole 9, which is opened toward the rotor body 52 along the rotor axis direction.

Similarly to the kneader 541 according to the sixth embodiment, the kneader 641 according to the present embodiment includes a plurality of inner sealing members 4A and an outer sealing member 4B, and the plurality of inner sealing members 4A are fitted into respective inner sealing grooves 2f formed in the inner peripheral surfaces of the second and third bearing elements 2b, 2c, respectively, wherein the inner sealing member 4A to be fitted into the inner seal groove 2f of the second bearing element 2b includes a part to be interposed between the second bearing element 2b and the third bearing element 2c in the rotor axis direction, while the inner sealing member 4A to be fitted into the inner seal groove 2f of the third bearing element 2b includes a part to be interposed between the third bearing element 2c and the fourth bearing element 2d in the rotor axis direction. On the other hand, the outer sealing member 4B is fitted into an outer seal groove 2g formed in the second bearing element 2b.

Although not graphically shown, it is preferable that the bearing elements adjacent to each other in the rotor axis direction among the plurality of bearing elements 2a to 2d have respective shapes fittable with each other. For example, it is allowable that the surface opposed to the second bearing element 2b in the rotor axis direction in the first bearing element 2a has a protrusion protruding in the rotor axis direction toward the second bearing element 2b, while the second bearing element 2b has a recess for receiving the protrusion. It is also allowable that, conversely, the second bearing element 2b has the protrusion while the first bearing element 2a has the recess. In this case, it is preferable that the inner seal groove 2f to receive the inner sealing member 4A is formed, for example, as shown in FIG. 9, at a position away in the rotor axis direction from the end of the bearing element in which the protrusion or the recess is formed.

The kneader 641 further includes a sleeve 10 shown in FIG. 10. The sleeve 10 is disposed so as to be interposed radially of the bearing unit 2 between respective inner peripheral surfaces of the plurality of bearing elements 2a to 2d and the outer peripheral surface 54a of the rotor shaft 54. The sleeve 10 includes a sleeve body 10a and a sleeve protrusion 10b. The sleeve body 10a has a cylindrical shape extending in the rotor axis direction along an outer peripheral surface 54a of the rotor shaft 54. The sleeve protrusion 10b is formed in one end part of opposite end parts of the sleeve body 10a in the rotor axis direction, the one end part being on the side farther from the rotor body 52, protruding radially outward beyond the outer peripheral surface of the other part. In the state where the plurality of bearing elements 2a to 2d and the sleeve 10 have been inserted into the bearing housing space S2 of the bearing support part 3b, a gap 14 is formed in the rotor axis direction between the bearing element farthest from the rotor body 52 among the plurality of bearing elements 2a to 2d, namely, the fourth bearing element 2d, and the sleeve protrusion 10b. Specifically, there is formed a recess 2r to secure the gap 14 in one end part of opposite end parts of the fourth bearing element 2d in the rotor axis direction, the one end part being on the side closer to the sleeve protrusion 10b.

In a state where the rotor body 52 is separated from the rotor shaft 54, the sleeve 10 can be extracted in the rotor axis direction to the kneading space so as to involve the first to fourth bearing elements 2a to 2d. The extraction of the sleeve 10 in the rotor axis direction, thus, enables the plurality of bearing elements 2a to 2d to be collectively extracted together with the sleeve 10 from between the inner peripheral surface 3n of the bearing support part 3b and the outer peripheral surface 54a of the rotor shaft 54. This allows the entire bearing unit 2 to be extracted in a short time compared with an operation of extracting the plurality of bearing elements 2a to 2d one by one.

The sleeve 10 does not have to be extracted together with all of the plurality of bearing elements 2a to 2d. For example, it is also allowable to sequentially perform extracting only the bearing element closest to the rotor body 52 among the plurality of bearing elements 2a to 2d, namely, the first bearing element 2a, with use of a drawing tool such as a bolt, and grasping the outer peripheral surface of the sleeve 10 exposed thereby to collectively extract the sleeve 10 and the remaining bearing elements, namely, the second to fourth bearing elements 2b to 2d.

The inner sealing member 4A according to the present embodiment seals a gap between the outer peripheral surface of the sleeve 10 and the inner peripheral surface of the bearing unit 2. Thus, the gap to be sealed by the inner sealing member 4A between the inner peripheral surface 2n of the bearing unit 2 and the outer peripheral surface 54a of the rotor shaft 54 is not limited to the gap formed by the inner peripheral surface 2n of the bearing unit 2 and the outer peripheral surface 54a of the rotor shaft 54, for example, as shown in FIG. 3 but also allowed to encompass a gap formed between the outer peripheral surface of the sleeve 10 and the inner peripheral surface of the bearing unit 2 at a position radially outward of the outer peripheral surface 54a of the rotor shaft 54 as shown in FIG. 10.

It is preferable that the rotor shaft 54 includes a rotor shaft protrusion part 54b opposed to one end part of opposite end parts of the bearing unit 2 in the rotor axis direction, the one end part being on the side farther from the rotor body 52. The rotor shaft protrusion part 54b allows the entire bearing unit 2 including the plurality of bearing elements 2a to 2d and the sleeve 10 to be collectively extracted together with the rotor shaft 54 by the extraction of the rotor shaft 54 from the bearing support part 3b to the kneading space in the rotor axis direction (rightward in FIG. 10).

The inner peripheral surface of the first bearing element 2a, which is the bearing element closest to the rotor body 52 among the plurality of bearing elements 2a to 2d, and the outer peripheral surface of the sleeve body 10a may have respective shapes screwable with each other. For example, the inner peripheral surface of the first bearing element 2a may be formed with a female screw part while the outer peripheral surface of the sleeve body 10a may be formed with a male screw part that can be screwed with the female screw part. This allows the draw of the first bearing element 2a to the kneading space with use of a pulling tool or the like to cause the remaining bearing elements 2b to 2d and the sleeve 10 to be also collectively extracted. In this case, the rotation of the rotor 5 may involve the rotation of the sleeve 10 and the first bearing element 2a together with the rotor shaft 54.

Alternatively, the sleeve 10 may be extracted following the sequential extractions of the plurality of bearing elements 2a to 2d.

The sleeve protrusion 10b allows the plurality of bearing elements 2a to 2d to be more reliably extracted together with the sleeve 10 from between the inner peripheral surface 3n of the bearing support part 3b and the outer peripheral surface 54a of the rotor shaft 54. Moreover, the gap 14 in the rotor axis direction, that is, the gap 14 formed between the fourth bearing element 2d and the sleeve protrusion 10b with the plurality of bearing elements 2a to 2d and the sleeve 10 having been inserted into between the inner peripheral surface 3n of the bearing support part 3b and the outer peripheral surface 54a of the rotor shaft 54, enables the rotation of the rotor 5 to be inhibited from involving seizure. Specifically, the rotation of the rotor 5 has a possibility of involving relative rotation between the sleeve 10 and the plurality of bearing elements 2a to 2d because the sleeve 10 has a possibility of being rotated together with the rotor shaft 54 during the rotation of the rotor 5 while the plurality of bearing elements 2a to 2d are supported by the bearing support part 3b. On the other hand, the pressure of the working fluid in the chamber 3, when being high, has a possibility of pushing the plurality of bearing elements 2a to 2d to the side opposite to the rotor body 52 in the rotor axis direction. In this case, the gap 14 can restrain the fourth bearing element 2d from being pressed against the sleeve protrusion 10b in the rotor axis direction, thereby inhibiting the relative rotation of the plurality of bearing elements 2a to 2d to the sleeve 10 from causing seizure between the fourth bearing element 2d and the sleeve protrusion 10b.

The kneader 641 according to the present embodiment further includes a sleeve sealing member 11 that seals a space between the outer peripheral surface 54a of the rotor shaft 54 and the inner peripheral surface 10n of the sleeve 10. The sleeve sealing member 11, for example, an O-ring, is attached to the outer peripheral surface 54a of the rotor shaft 54. Specifically, the outer peripheral surface 54a of the rotor shaft 54 is formed with an annular seal groove 54f, into which the sleeve sealing member 11 is fitted.

The kneader 641 further includes a rotation prevention member for preventing the bearing unit 2 from being rotated with respect to the bearing support part 3b. Specifically, the kneader 641 includes a first rotation prevention member 12A and a second rotation prevention member 12B, which are illustrated in FIG. 10. The first rotation prevention member 12A radially penetrates the bearing support part 3b from the outer surface of the bearing support part 3b to the bearing housing space S2, the radially inner end of the first rotation prevention member 12A engaged with a target bearing element selected from the plurality of bearing elements 2a to 2d, namely, the second bearing element 2b in FIG. 10. Similarly, the second rotation prevention member 12B radially penetrates the bearing support part 3b from the outer surface of the bearing support part 3b to the bearing housing space S2, the radially inner end of the second rotation prevention member 12B engaged with the target bearing element selected from the plurality of bearing elements 2a to 2d, namely, the third bearing element 2c in FIG. 10.

The first and second rotation prevention members 12A, 12B prevent the second and third bearing elements 2b, 2c, which are the target bearing elements, from being rotated about the rotor shaft 54 with respect to the bearing support part 3b, thereby preventing the second and third bearing elements 2b, 2c from rotating together with the rotor shaft 54 accompanying the rotation of the rotor 5.

Respective structures, fitted with each other as described above, included in the two bearing elements adjacent to each other enable the bearing element fitted with the target bearing element to be also prevented from rotating by the prevention of the rotation of the target bearing element. This allows the number of rotation prevention members required to prevent each of the plurality of bearing elements 2a to 2d from rotating to be reduced. For example, the first bearing element 2a and the second bearing element 2b shown in FIG. 10 having respective structures fitted with each other enables the second rotation prevention member 12A which prevents the second bearing element 2b from rotating to thereby also prevent the first bearing element 2a from rotating.

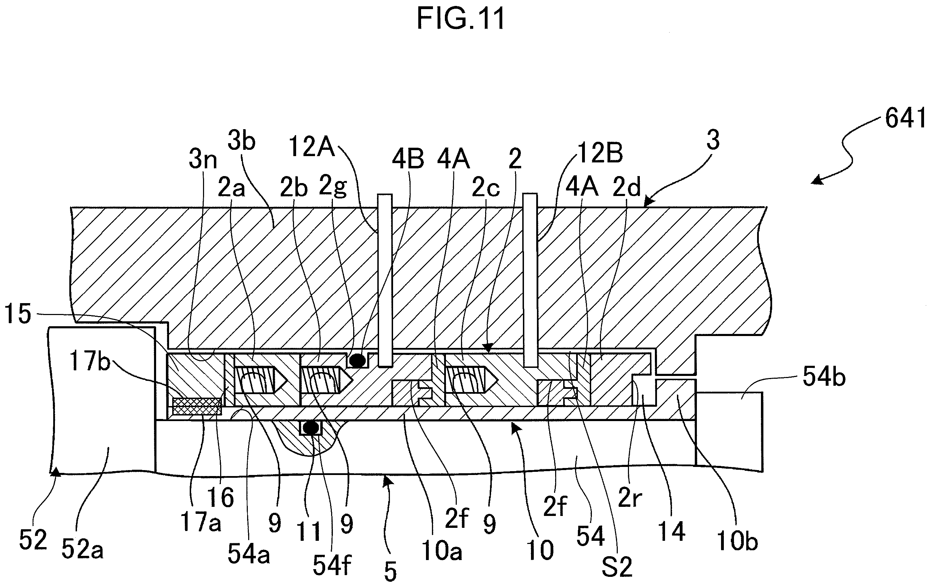

As shown in FIG. 11 as a modification of the kneader 641, the kneader 641 may further include a viscoseal 15. The viscoseal 15 is disposed between the outer peripheral surface of the sleeve 10 and the inner peripheral surface 3n of the bearing support part 3b. The viscoseal 15 is interposed between the first bearing element 2a and the rotor body 52 in the rotor axis direction. Between the viscoseal 15 and the first bearing element 2a is further interposed a spacer 16. The viscoseal 15 is screwed with the outer peripheral surface of the sleeve body 10a. Specifically, the outer peripheral surface of the sleeve body 10a is formed with a male screw part 17a, while the inner peripheral surface of the viscoseal 15a is formed with a female screw part 17b that is screwed with the male screw part 17a. The screwing causes the sleeve 10 and the viscoseal 15 to rotate together with the rotor shaft 54 accompanying the rotation of the rotor 52. Besides, the screwing enables the draw of the viscoseal 15 to the kneading space to cause the plurality of bearing elements 2a to 2d and the sleeve 10 to be collectively extracted from between the outer peripheral surface 54a of the rotor shaft 54 and the inner peripheral surface 3n of the bearing support part 3b.

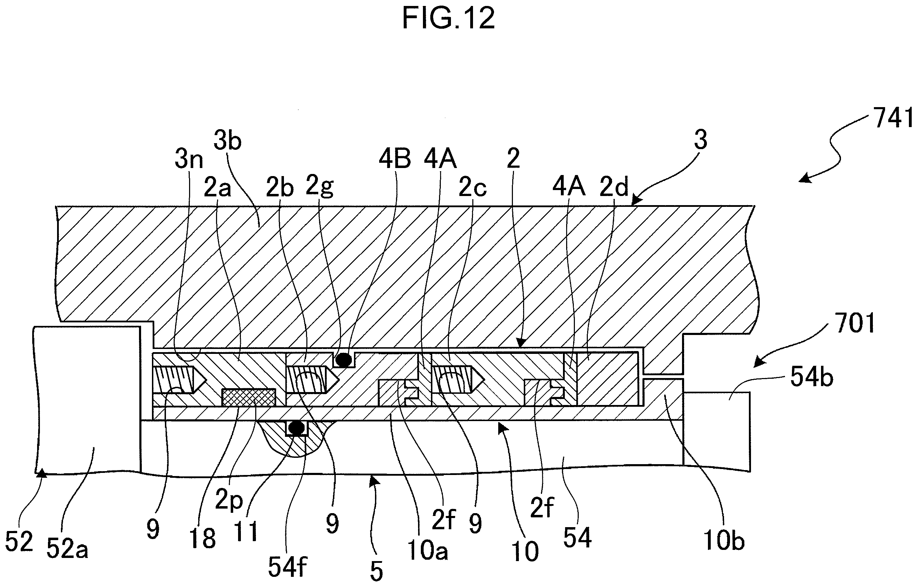

FIG. 12 shows a kneader 741 according to an eighth embodiment of the present invention. Similar to the kneader 641 according to the seventh embodiment, the kneader 741 according to the present embodiment also includes a bearing unit 2 including a plurality of bearing elements aligned in the rotor axis direction, the plurality of bearing elements being a first bearing element 2a, a second bearing element 2b, a third bearing element 2c, and a fourth bearing element 2d. Each of the first to third bearing elements 2a to 2A has an axially inner end part, which is formed with a screw hole 9. The kneader 741 further includes a plurality of inner sealing members 4A that seal the gap between the outer peripheral surface of a sleeve 10 and the inner peripheral surface of the bearing unit 2, and an outer sealing member 4B that seals the gap between the outer peripheral surface of the bearing unit 2 and the inner peripheral surface 3n of a bearing support part 3b. The plurality of inner sealing members 4A include an inner sealing member 4A including a part fitted into an inner seal groove 2f formed in the second bearing element 2b and interposed between the second bearing element 2b and the third bearing element 2c, and an inner sealing member 4A including a part fitted into an inner seal groove 2f formed in the third bearing element 2c and interposed between the third bearing element 2c and the fourth bearing element 2d. The outer sealing member 4B, for example, an O-ring, is attached to the outer peripheral surface of the second bearing element 2b.

The bearing unit 2 further includes the sleeve 10 and a sleeve sealing member 11 similarly to the bearing unit 2 according to the seventh embodiment. The sleeve 10 is interposed between the inner peripheral surface of the first to fourth bearing elements 2a to 2d and the outer peripheral surface of the rotor shaft 54, radially of the bearing unit 2. The sleeve 10 includes a cylindrical sleeve body 10a and a sleeve protrusion 10b, and the sleeve sealing member 11 is fitted into a seal groove 54f formed in the outer peripheral surface 54a of the rotor shaft 54, sealing a space between the inner peripheral surface 10n of the sleeve 10 and the outer peripheral surface 54a of the rotor shaft 54.

The kneader 741 according to the eighth embodiment further includes an inner pile seal 18 shown in FIG. 12. The inner pile seal 18 protects the inner sealing member 4A from foreign matter in the kneading material. For example, the case of kneading of a powder material containing a nanomaterial such as silica or carbon, for example, in the kneading space S1 shown in FIG. 2, involves a possibility that the powder material enters the bearing housing space S2 and damages the inner sealing member 4A or the outer sealing member 4B to thereby deteriorate the sealing performance of the sealing members 4A and 4B. Especially, the size of the gap between the inner peripheral surface of the bearing unit 2 and the outer peripheral surface 54a of the rotor shaft 54 is likely to vary in the rotor axis direction because of the circumferential sliding contact of the inner peripheral surface of the bearing unit 2 with the outer peripheral surface of the sleeve body 10a, which is likely to allow the powder material to enter the gap. The inner pile seal 18 restrains the powder material having entered the gap from the kneading space from reaching the inner sealing member 4A.

Specifically, the inner pile seal 18 is disposed so as to seal a gap between the inner peripheral surface of the bearing unit 2 and the outer peripheral surface 54a of the rotor shaft 54, which is the gap between the inner peripheral surface of the bearing unit 2 and the outer peripheral surface of the sleeve body 10a in the present eighth embodiment, at a position closer to the kneading space than the inner sealing member 4A in the rotor axis direction. In the kneader 741 illustrated in FIG. 12, an annular inner-pile-seal groove 2p is formed in the inner peripheral surface of the first bearing element 2a located at a position closer to the kneading space than the inner sealing member 4A, and the inner pile seal 18 is fitted into the pile-seal groove 2p. The inner pile seal 18 includes a base fabric and a large number of fibrous cut pile yarns woven into the base fabric. The base fabric is formed in an annular shape to be fitted into the inner-pile-seal groove 2p. The cut pile yarns are raised from the base fabric toward the outer peripheral surface 54a of the rotor shaft 54 to thereby seal the gap between the inner peripheral surface of the first bearing element 2a and the outer peripheral surface of the sleeve body 10a. Specifically, in the eighth embodiment, the tips of the cut pile yarns of the inner pile seal 18 are pressed against the outer peripheral surface of the sleeve body 10a, thereby restraining the powder material having entered the gap between the inner peripheral surface of the bearing unit 2 and the outer peripheral surface of the sleeve 10 from reaching the inner sealing member 4A.

Thus, even if the powder material has entered the gap between the inner peripheral surface of the bearing unit 2 and the outer peripheral surface 54a of the rotor shaft 54, which is the gap between the inner peripheral surface of the bearing unit 2 and the outer peripheral surface of the sleeve body 10a in FIG. 12, the inner pile seal 18 reduces the possibility that the powder material reaches the inner sealing member 4A over the inner pile seal 18, thereby inhibiting the powder material from damaging the inner sealing member 4A to deteriorate the sealing performance of the inner sealing member 4A.

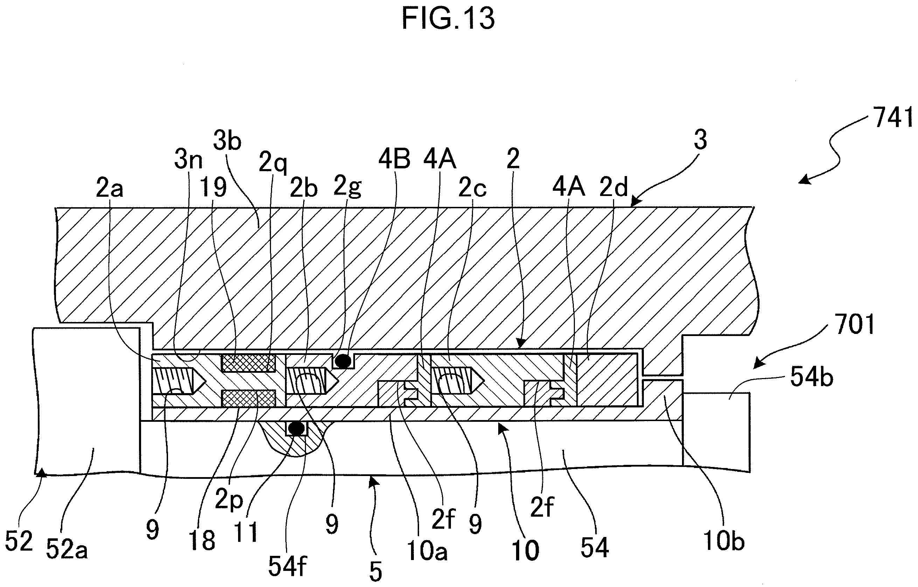

As shown in FIG. 13 as a modification of the eighth embodiment, it is preferable that the kneader 741 further includes an outer pile seal 19. The outer pile seal 19 is provided to restrain the powder material from reaching the outer sealing member 5.

Specifically, the outer pile seal 19 is disposed so as to seal a gap between the outer peripheral surface of the bearing unit 2 and the inner peripheral surface 3n of the bearing support part 3b enclosing the bearing housing space S2 at a position closer to the kneading space than the outer sealing member 4B in the rotor axis direction. In the kneader 741 illustrated in FIG. 13, an annular outer-pile-seal groove 2q is formed in the outer peripheral surface of the first bearing element 2a at a position closer to the kneading space than the outer sealing member 4B, and the outer pile seal 19 is fitted into the outer-pile-seal groove 2q. Similarly to the inner pile seal 18, the outer pile seal 19 includes a base fabric and a large number of fibrous cut pile yarns, and the base fabric is formed in an annular shape to be fitted into the outer-pile-seal groove 2q. The cut pile yarns are raised from the base fabric toward the inner peripheral surface 3n of the bearing support part 3b to thereby seal the gap between the outer peripheral surface of the first bearing element 2a and the inner peripheral surface 3n of the bearing support part 3b. Specifically, in the eighth embodiment, the tips of the cut pile yarns of the outer pile seal 19 are pressed against the inner peripheral surface 3n of the bearing support part 3b, thereby restraining the powder material having entered the gap between the outer peripheral surface of the bearing unit 2 and the inner peripheral surface 3n of the bearing support part 3b from reaching the outer sealing member 5.

The material that forms each of the inner pile seal 18 and the outer pile seal 19 preferably has an SP value enough to inhibit the inner pile seal 18 and the outer pile seal 19 from being swelled due to the contact of the inner pile seal 18 and the outer pile seal 19 with the working fluid. The SP value (Hildebrand solubility parameter: δ) is a physical property value defined by the square root of the cohesive energy density, being a numerical value indicating the dissolution behavior of the solvent. The smaller difference between the SP value of the inner pile seal 18 and the outer pile seal 19 and the SP value of the working fluid renders the swelling more likely to occur, wherein the swelling promotes the sealing performance and durability of the inner pile seal 18 and the outer pile seal 19 to be deteriorated.

Specifically, in the case of the working fluid being supercritical CO₂, whose SP value is 8.7, the SP value of each of the material forming the inner pile seal 18 and the material forming the outer pile seal 19 is preferably such a value that the difference between the SP value and the SP value of the CO₂ exceeds 0.7, namely, a value less than 8.0 or a value exceeding 9.4. This enables the sealing performance and the durability of each of the inner pile seal 18 and the outer pile seal 19 to be effectively inhibited from being deteriorated, regardless of the use of the supercritical CO₂ as the working fluid.

Thus, even if the powder material has entered the gap between the inner peripheral surface of the bearing unit 2 and the inner peripheral surface 3n of the bearing support part 3b, the outer pile seal 19 reduces the possibility that the powder material reaches the outer sealing member 4B over the outer pile seal 19, thereby inhibiting the powder material from damaging the outer sealing member 4B to deteriorate the sealing performance of the outer sealing member 4B. The outer pile seal 19 does not necessarily have to be used with the inner pile seal 18. For example, the inner pile seal 18 is omittable in the kneader 741 shown in FIG. 13.

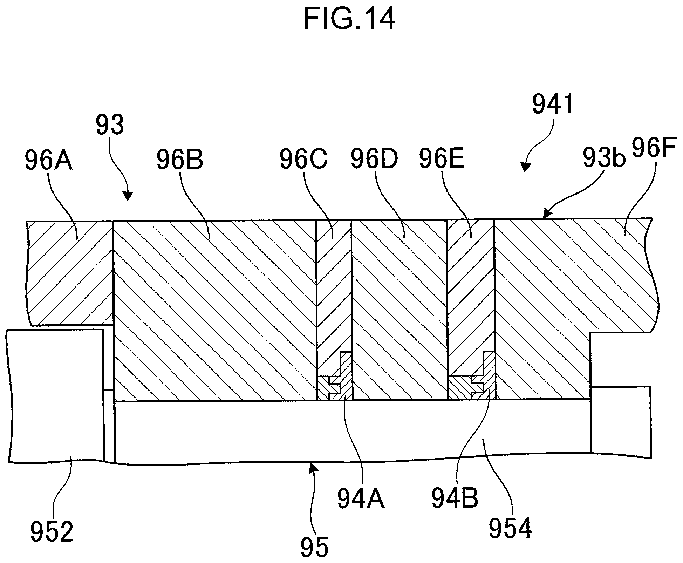

The effect provided by the kneader according to each embodiment described above is made clearer by comparison with a kneader 941 shown as a reference example in FIG. 14. The kneader 941 includes a rotor 95 including a rotor body 952 and a rotor shaft 954, a chamber 93 including a chamber body and a bearing support part 93b, and a plurality of sealing members 94A and 94B. Each of the sealing members 94A and 94B is a spring built-in seal for single pressure, sealing a space between the outer peripheral surface of the rotor shaft 954 and the inner peripheral surface of the bearing support part 93b. The bearing support part 93b is constituted by a plurality of members 96A, 96B, 96C, 96D, 96E, and 96F aligned in the rotor axis direction. The sealing member 94A is sandwiched in the rotor axis direction between the members 96B and 96D to be fixed at a position on the radially inner side of the member 96C, and the sealing member 94B is sandwiched in the rotor axis direction between the members 96D and 96F to be fixed at a position radially inward of the member 96E.

Replacing the first and second sealing members 94A and 94B in the kneader 941 requires troublesome operations of taking out the rotor 95 from the inside of the chamber 93 and disassembling the chamber 93. In contrast, the kneader in each of the embodiments allows the maintenance on the sealing members 4A and 4B to be easily performed by the separation of the rotor body 52 from the rotor shaft 54 and the extraction of the bearing unit 2 from between the inner peripheral surface 3n of the bearing support part 3b and the outer peripheral surface 54a of the rotor shaft 54.

The embodiments of the present invention having been described merely show specific examples, with no intension to particularly limit the present invention, allowing specific configurations and the like to be appropriately changed in design. Besides, the actions and effects described about the embodiments of the present invention are merely ones listed as the most suitable actions and effects generated by the present invention, and the actions and effects of the present invention are not limited to those described in the embodiments of the present invention.

For example, the rotation prevention members 12A and 12B according to the seventh embodiment are also applicable to any of the first to sixth and eighth embodiments.

In each of the sixth to eighth embodiments, as a means for facilitating the extraction of the bearing unit 2, may be provided one of the protrusion part 6 according to the second embodiment, the male screw part 7a and the female screw part 7b according to the third embodiment, and the magnetic part 8 according to the fourth embodiment, to the end part of the bearing unit 2 in place of the screw hole 9.

Each of the inner pile seal 18 and the outer pile seal 19 is also applicable to any of the first to seventh embodiments. For example, even in a kneader not including the sleeve 10 as in the kneader 41 according to the first embodiment, the inner pile seal 18 can be disposed so as to seal the gap between the inner peripheral surface 2n of the bearing unit 2 and the outer peripheral surface 54a of the rotor shaft 54.

As has been described, there is provided a kneader allowing maintenance on a sealing member to be easily performed. The kneader performs kneading of a material in presence of a working fluid in a supercritical state or a subcritical state. The kneader includes a chamber, a rotor, a bearing unit, an inner sealing member, and an outer sealing member. The chamber includes a chamber body defining a kneading space and a bearing support part defining a bearing housing space, with communication between the kneading space and the bearing housing space. The rotor includes a rotor shaft and a rotor body that are connected to each other in a rotor axis direction so as to be separable from each other, wherein the rotor shaft is disposed in the bearing housing space and the rotor body is configured to perform kneading of the material in the kneading space. The bearing unit is disposed between an inner peripheral surface of the bearing support part and an outer peripheral surface of the rotor shaft in the bearing housing space so as to be attachable to and detachable from the bearing support part and the rotor shaft, and rotatably supports the rotor shaft while being supported by the bearing support part. The inner sealing member seals a gap between an inner peripheral surface of the bearing unit and the outer peripheral surface of the rotor shaft. The outer sealing member seals a gap between an outer peripheral surface of the bearing unit and the inner peripheral surface of the bearing support part. The bearing unit is disposed such that separation of the rotor body from the rotor shaft allows the bearing unit to be extracted in an axis direction of the rotor from between the inner peripheral surface of the bearing support part and the outer peripheral surface of the rotor shaft to the kneading space and allows the bearing unit to be inserted into between the bearing support part and the rotor shaft in the rotor axis direction from the kneading space.

In the kneader, maintenance on the inner sealing member and the outer sealing member, for example, the replacement thereof, can be easily performed by simple operations of separating the rotor body from the rotor shaft and extracting the bearing unit from between the inner peripheral surface of the bearing support part and the outer peripheral surface of the rotor shaft. Besides, there is no need for taking out the rotor shaft from the inside of the chamber for the maintenance of the inner sealing member or the outer sealing member, which allows a space required around the kneader for taking out the rotor shaft to be reduced.

It is preferable that the bearing unit includes a bearing body part housed in the bearing housing space and a protrusion part located on a side closer to the rotor body in the rotor axis direction than the bearing body part and having a thickness larger than a thickness of the bearing body part, radially of the bearing unit, and the protrusion part protrudes toward the rotor body beyond the bearing support part in the rotor axis direction in a state where the bearing body part has been inserted into between the bearing support part and the rotor shaft. The protrusion part facilitates the extraction of the bearing unit from between the outer peripheral surface of the rotor shaft and the inner peripheral surface of the bearing support part.

It is allowable that the bearing unit includes a male screw part, and the bearing support part includes a female screw part screwable with the male screw part. The male screw part is formed in an outer peripheral surface of one end part of opposite end parts of the bearing unit in the rotor axis direction, the one end part being on a side closer to the rotor body. The female screw part is formed in an inner peripheral surface of the bearing support part enclosing the bearing housing space, screwed with the male screw part to fix the bearing unit in the bearing housing space, thereby preventing the bearing unit from rotating together with the rotor shaft.

The bearing unit may include a magnetic part. The magnetic part has magnetism, and is provided in one end part of opposite end parts of the bearing unit in the rotor axis direction, the one end part being on a side closer to the rotor body. The magnetic part allows the magnetic part to be attracted by a magnet. Specifically, the magnetism of the magnetic part has an intensity enough to allow the magnetic part to be attracted to the magnet to be drawn out from between the inner peripheral surface of the bearing support part and the outer peripheral surface of the rotor shaft in a state where the rotor body is separated from the rotor shaft, thereby facilitating the removal of the bearing unit from between the outer peripheral surface of the rotor shaft and the inner peripheral surface of the bearing support part.

The bearing unit may have a screw hole. The screw hole is formed in one end part of opposite end parts of the bearing unit in the rotor axis direction, the one end part being on a side closer to the rotor body, and opened toward the rotor body in the rotor axis direction, thereby allowing a drawing tool for drawing the bearing unit to be screwed into the screw hole to be connected to the bearing unit.

The bearing unit may include a plurality of bearing elements, which are aligned in the rotor axis direction to rotatably support the rotor shaft. This allows the bearing unit to be extracted from between the outer peripheral surface of the rotor shaft and the inner peripheral surface of the bearing support part for each bearing element, and to be inserted into between the outer peripheral surface of the rotor shaft and the inner peripheral surface of the bearing support part for each bearing element.

In this case, the kneader further includes a sleeve interposed between the plurality of bearing elements and the outer peripheral surface of the rotor shaft radially of the bearing unit. In a state where the rotor body is separated from the rotor shaft, the sleeve can be extracted from between the inner peripheral surface of the bearing support part and the outer peripheral surface of the rotor shaft together with the plurality of bearing elements arranged around the sleeve.

The sleeve preferably includes a sleeve body extending in the rotor axis direction along the outer peripheral surface of the rotor shaft and a sleeve protrusion protruding outward radially of the bearing unit from one end part of opposite ends of the sleeve body in the rotor axis direction, the one end part being on a side opposite to the rotor body. The sleeve protrusion enables the plurality of bearing elements to be more reliably extracted together with the sleeve. Here, it is preferable that a gap in the rotor axis direction is formed between the sleeve protrusion and the bearing element farthest from the rotor body among the plurality of bearing elements in a state where the plurality of bearing elements and the sleeve are inserted into the bearing housing space, the gap inhibiting seizure between the sleeve protrusion and the bearing element from occurring accompanying rotation of the rotor.

It is preferable that the kneader further includes an inner pile seal that seals a gap between the inner peripheral surface of the bearing unit and the outer peripheral surface of the rotor shaft, the inner pile seal located at a position closer to the rotor body than the inner sealing member in the rotor axis direction. The inner pile seal can restrain foreign matter having entered the gap from the kneading space from reaching the inner sealing member, thereby inhibiting the sealing performance of the inner sealing member from being deteriorated by the foreign matter.

It is preferable that the kneader further includes an outer pile seal that seals a gap between an outer peripheral surface of the bearing unit and an inner peripheral surface of the bearing support part enclosing the bearing housing space, the outer pile seal located at a position closer to the rotor body than the outer sealing member in the rotor axis direction. The outer pile seal can restrain foreign matter having entered the gap from the kneading space from reaching the outer sealing member, thereby inhibiting the sealing performance of the outer sealing member from being deteriorated by the foreign matter.

In the case where the working fluid is supercritical CO₂, the material forming the inner pile seal preferably has an SP value of less than 8.0 or greater than 9.4. This renders the difference between the SP value (8.7) of the working fluid and the SP value of the inner pile seal large to inhibit the inner pile seal from being swelled due to the contact with the working fluid, thereby allowing the sealing performance and the durability of the inner pile seal to be effectively inhibited from being deteriorated by the swelling.

Similarly, in the case where the working fluid is supercritical CO₂, the material forming the outer pile seal preferably has an SP value of less than 8.0 or greater than 9.4. This renders the difference between the SP value (8.7) of the working fluid and the SP value of the outer pile seal large to inhibit the outer pile seal from being swelled due to the contact with the working fluid, thereby allowing the sealing performance and the durability of the outer pile seal to be effectively inhibited from being deteriorated by the swelling.

The kneader may further include a rotation prevention member configured to prevent the bearing unit from rotating about the rotor shaft with respect to the bearing support part. The prevention of the rotation of the bearing unit by the rotation prevention member allows the bearing unit to favorably rotatably supports the rotor shaft.

In a case where the bearing unit includes a plurality of bearing elements, which are aligned in the rotor axis direction to rotatably support the rotor shaft, it is preferable that the rotation prevention member is disposed so as to prevent a target bearing element selected from among the plurality of bearing elements from rotating, the target bearing element and the bearing element adjacent to the target bearing element in the rotor axis direction having respective shapes to be fitted with each other so as to restrain the target bearing element and the bearing element adjacent to the target bearing element from relative rotation to each other. This enables the rotation prevention member to also prevent the bearing element fitted with the target bearing element from rotating by the prevention of the rotation of the target bearing element.

## Claims

1. A kneader that performs kneading of a material in presence of a working fluid in a supercritical state or a subcritical state, comprising:
a chamber including a chamber body defining a kneading space and a bearing support part defining a bearing housing space, with communication between the kneading space and the bearing housing space;
a rotor including a rotor shaft and a rotor body that are interconnected in a rotor axis direction so as to be separable from each other, the rotor shaft disposed in the bearing housing space, the rotor body configured to perform the kneading of the material in the kneading space;
a bearing unit disposed between an inner peripheral surface of the bearing support part and an outer peripheral surface of the rotor shaft in the bearing housing space so as to be attachable to and detachable from the bearing support part and the rotor shaft, the bearing unit supporting the rotor shaft while being supported by the bearing support part;
an inner sealing member that seals a gap between an inner peripheral surface of the bearing unit and the outer peripheral surface of the rotor shaft; and
an outer sealing member that seals a gap between an outer peripheral surface of the bearing unit and the inner peripheral surface of the bearing support part, wherein
the bearing unit is disposed such that separation of the rotor body from the rotor shaft allows the bearing unit to be extracted in an axis direction of the rotor from between the inner peripheral surface of the bearing support part and the outer peripheral surface of the rotor shaft to the kneading space and allows the bearing unit to be inserted into between the bearing support part and the rotor shaft in the rotor axis direction from the kneading space.

2. The kneader according to claim 1, wherein the bearing unit includes a bearing body part housed in the bearing housing space and a protrusion part located on a side closer to the rotor body in the rotor axis direction than the bearing body part and having a thickness larger than a thickness of the bearing body part, radially of the bearing unit, the protrusion part protruding in the rotor axis direction toward the rotor body beyond the bearing support part in a state where the bearing body part has been inserted into between the bearing support part and the rotor shaft.

3. The kneader according to claim 1, wherein the bearing unit includes a male screw part, which is formed in an outer peripheral surface of one end part of opposite end parts of the bearing unit in the rotor axis direction, the one end part being on a side closer to the rotor body, and the bearing support part includes a female screw part screwable with the male screw part, the female screw part formed in an inner peripheral surface of the bearing support part enclosing the bearing housing space and screwed with the male screw part to thereby fix the bearing unit in the bearing housing space.

4. The kneader according to claim 1, wherein the bearing unit includes a magnetic part, which is provided in one end part of opposite end parts of the bearing unit in the rotor axis direction, the one end part being on a side closer to the rotor body, the magnetic part having magnetism to allow the magnetic part to be attracted to a magnet.

5. The kneader according to claim 1, wherein the bearing unit has a screw hole, which is formed in one end part of opposite end parts of the bearing unit in the rotor axis direction, the end part being on a side closer to the rotor body, the screw hole opened toward the rotor body in the rotor axis direction.

6. The kneader according to any one of claims 1 to 5, wherein the bearing unit includes a plurality of bearing elements, which are aligned in the rotor axis direction to rotatably support the rotor shaft.

7. The kneader according to claim 6, further comprising a sleeve interposed between the plurality of bearing elements and the outer peripheral surface of the rotor shaft radially of the bearing unit, wherein the sleeve can be extracted from between the inner peripheral surface of the bearing support part and the outer peripheral surface of the rotor shaft together with the plurality of bearing elements arranged around the sleeve in a state where the rotor body is separated from the rotor shaft.

8. The kneader according to claim 7, wherein the sleeve includes a sleeve body extending in the rotor axis direction along the outer peripheral surface of the rotor shaft and a sleeve protrusion protruding outward radially of the bearing unit from one end part of opposite end parts of the sleeve body in the rotor axis direction, the one end part being on a side opposite to the rotor body, and a gap in the rotor axis direction is formed between the sleeve protrusion and the bearing element farthest from the rotor body among the plurality of bearing elements in a state where the plurality of bearing elements and the sleeve are inserted into the bearing housing space.

9. The kneader according to claim 1, further comprising an inner pile seal that seals a gap between the inner peripheral surface of the bearing unit and the outer peripheral surface of the rotor shaft, wherein the inner pile seal is located at a position closer to the rotor body than the inner sealing member in the rotor axis direction.

10. The kneader according to claim 9, wherein the working fluid is supercritical CO₂ and a material forming the inner pile seal has an SP value of less than 8.0 or greater than 9.4.

11. The kneader according to claim 1, further comprising an outer pile seal configured to seal a gap between an outer peripheral surface of the bearing unit and an inner peripheral surface of the bearing support part enclosing the bearing housing space, wherein the outer pile seal is located at a position closer to the rotor body than the outer sealing member in the rotor axis direction.

12. The kneader according to claim 11, wherein the working fluid is supercritical CO₂ and a material forming the outer pile seal has an SP value of less than 8.0 or greater than 9.4.

13. The kneader according to any one of claims 1 to 5, further comprising a rotation prevention member configured to prevent the bearing unit from rotating about the rotor shaft with respect to the fixing portion.

14. The kneader according to claim 13, wherein the bearing unit includes a plurality of bearing elements, which are aligned in the rotor axis direction to rotatably support the rotor shaft, and the rotation prevention member is disposed so as to prevent a target bearing element selected from among the plurality of bearing elements from rotating, the target bearing element and the bearing element adjacent to the target bearing element in the rotor axis direction having respective shapes to be fitted with each other to restrain the target bearing element and the bearing element adjacent to the target bearing element from relative rotation to each other.
